# EUROPÄISCHE PATENTSCHRIFT

(11) **EP 2 227 124 B1**
(45) Veröffentlichungstag und Bekanntmachung des Hinweises auf die Patenterteilung: **07.03.2012**
(21) Anmeldenummer: 08862758.3
(22) Anmeldetag: 04.12.2008
(51) Int. Cl.: A47J 43/046, A47J 43/07, A47J 36/06, A47J 27/04

(54) **KÜCHENMASCHINE MIT EINEM AUFHEIZBAREN GEFÄSS**
FOOD PROCESSOR HAVING A HEATABLE VESSEL
APPAREIL DE CUISINE DOTÉ D'UN RÉCIPIENT POUVANT ÊTRE CHAUFFÉ

(30) Priorität: 17.12.2007 DE 102007060749
(43) Veröffentlichungstag der Anmeldung: 15.09.2010
(73) Patentinhaber: Vorwerk & Co. Interholding GmbH, 42275 Wuppertal (DE)
(72) Erfinder: WINDORFER, Harald, 40822 Mettmann (DE)
(74) Vertreter: Müller, Enno
(86) Internationale Anmeldenummer: PCT/EP2008/066760
(87) Internationale Veröffentlichungsnummer: WO 2009/077335

(56) Entgegenhaltungen:
- EP-B- 0 757 530
- WO-A-2006/022801
- DE-C1- 10 249 477

## Beschreibung

Die Erfindung betrifft eine Küchenmaschine mit einem in seinem unteren Bereich aufheizbaren Gefäß nach den Merkmalen des Oberbegriffes des Anspruches 1 bzw. Anspruches 2.

Aus der EP 0757530 B1 ist eine derartige Küchenmaschine bekannt. Zwischen dem vorgesehenen Deckel und den zwei in einem Ausführungsbeispiel vorgesehenen diametral gegenüberliegenden, überkragenden Griffen kann beispielsweise im Zuge eines Garprozesses Dampf austreten.

Aus der WO 2006/022801 A1 ist es für eine Kuchenbackform bekannt, einen Deckel vorzusehen, der in Überdeckung zu dem Aufnahmebereich der Unterform einen umlaufenden Kreis von Bohrungen aufweist, um einen Dampfaustritt zu ermöglichen. Gleichwohl am Rand austretender Dampf tritt unkontrolliert aus und kann zu einer Beeinträchtigung der Handhabbarkeit zufolge hoher Temperaturen führen.

Ausgehend von dem eingangs genannten Stand der Technik stellt sich der Erfindung die Aufgabe, eine Küchemaschine der genannten Art insbesondere handhabungstechnisch weiter zu verbessern.

Diese Aufgabe ist zunächst beim Gegenstand des Anspruchs 1 gelöst, wobei darauf abgestellt ist, dass sich entlang einem Deckelrand unterseitig ein Stützrand erstreckt, der bei direkter Anordnung des Deckels auf dem Gargefäß auf einem Rand des Gargefäßes auftrifft, wobei dem Dampf im Bereich des Griffes ein Weg zwischen dem Griff und dem Deckelrand vorgegeben ist. Diese Aufgabe ist weiterhin beim Gegenstand des Anspruches 2 gelöst, wobei darauf abgestellt ist, dass dem Dampf im Bereich des Griffes ein Weg zwischen dem Griff und einem Deckelrand vorgegeben ist und dass der Griff mit dem Deckelrand nur über einen Teilbereich einer Breite des Griffes verbunden ist und dass der Weg seitlich zum Anbindungsbereich des Griffes gegeben ist.

Zufolge dieser Ausgestaltung in ein definierter Dampfaustritt gegeben. Dieser tritt entsprechend kontrolliert durch den vorgegebenen Weg zwischen Griff und Deckelrand. Durch diese konstruktive Maßnahme wird der Dampf gezielt an dem Griff vorbeigeführt, was die Kondensation des Dampfes an dem Griff ohne zusätzliche Mittel wie Dichtung oder dergleichen, besondere Oberflächenstrukturen oder besondere Werkstoffe verhindert. Der Griff wird zufolge des kontrollierten Dampfaustritts zwischen Griff und Deckelrand weder heiß noch durch Kondensat nass. Des Weiteren wird ein Abtropfen von Kondensat von der Griffunterseite auf die Arbeitsfläche oder dergleichen verhindert. Zudem kann zufolge der weiterhin seitlichen, überkragenden Anordnung des Griffes bzw. einer Mehrzahl derselben der Deckel in in Überkopfstellung abgelegter Ausrichtung als Untersetzer bspw. für das Gefäß dienen.

In einer Weiterbildung des Erfindungsgegenstandes ist vorgesehen, dass der Anbindungsbereich des Griffes oberhalb des Topfrandes vorgesehen ist, so insbesondere in einer oberhalb der durch den Topfrand definierten Ebene, wobei weiter der Griff über dessen Anbindungsbereich bevorzugt materialeinheitlich einstückig mit dem Deckel geformt ist. Zudem sind bevorzugt mehrere Griffe, weiter bevorzugt gleichmäßig verteilt über den Deckelumfang vorgesehen, so beispielsweise zwei gegenüberliegend angeordnete Griffe oder ein als Griff ausgeformter umlaufender, überkragender Griffkragen.

In weiterer Ausgestaltung kann zwischen dem Deckel und dem Topfrand ein Einsatzteil, so beispielsweise in Form eines Gareinsatzes, mit einem Griff angeordnet sein, wobei dem Dampf im Bereich des Griffes ein Weg zwischen dem Griff und einem Einsatzteilrand vorgegeben ist. Entsprechend ist auch hinsichtlich des Dampfaustrittes aus dem Einsatzteil ein Weg zwischen dessen Griff und dem Rand vorgegeben. Der Deckel kann hierbei sowohl das Gefäß als auch das randseitig des Gefäßes sich abstützende Einsatzteil überdecken. Der aus dem Gefäß austretende Dampf tritt, sofern der Deckel nicht das Einsatzteil überfängt, über den Weg zwischen einsatzteilseitigem Griff und Einsatzteilrand belassenen Weg zwischen den Anbindungsbereichen des Einsatzteilgriffes nach außen. Ist das Einsatzteil deckelverschlossen, so wird der austretende Dampf aus dem Rührgefäß über den vorbeschriebenen Weg zwischen Einsatzteilgriff und Einsatzteilrand durch den dort belassenen Weg geführt, wonach sich der Weg zwischen Deckelgriff und Deckelrand anschließt. Der im deckelverschlossenen Raum des Einsatzteiles sich einstellende Dampf tritt randseitig zwischen Einsatzteilrand und Deckelrand aus, um hiernach über den vorgegebenen Weg zwischen Deckelgriff und Deckelrand kondensatfrei auszutreten. Zufolge vorbeschriebener Ausgestaltung bleibt sowohl der Griff des Einsatzteiles als auch der Griff des Deckels kondensatfrei, das heißt trocken und darüber hinaus kalt oder zumindest nur bis zu einer Temperatur erwärmt, die ein Anfassen weiterhin zulässt.

Der Griff des Deckels und/ oder des Einsatzteiles ist in einer bevorzugten Ausgestaltung umlaufend ausgebildet, so weiter insbesondere als umlaufender Griffkragen. Entsprechend sind auch weiter bevorzugt über den Umfang verteilt mehrere Wege zum Dampfdurchtritt zwischen dem Griff und dem zugeordneten Rand (Deckelrand und/oder Einsatzteilrand) belassen.

Hierbei entspricht die Breite eines Anbindungsbereiches in Umfangsrichtung eines Griffkragens betrachtet bzw. in Breitenrichtung eines Einzelgriffes einem Drittel bis einem Zwanzigstel der freien Länge zwischen zwei Anbindungsbereichen. Demzufolge sind die Wege zum Durchtritt des Dampfes in Umfangs- bzw. Breitenrichtung des Griffes um ein Vielfaches größer bemessen als die den Griff an den Deckel bzw. an das Einsatzteil festlegenden Anbindungsbereiche. So sind weiter die Wege in einem Grundriss auf den Deckel bzw. auf das Einsatzteil betrachtet schlitzförmig ausgebildet, mit einer in Umfangsrichtung bzw. Breitenrichtung eines Griffes gemessenen Länge, die einem Mehrfachen, so weiter beispielsweise einem Fünf- bis einem Zwanzigfachen der quer hierzu gemessenen Schlitzbreite entspricht.

In einer Weiterbildung des Erfindungsgegenstandes ist vorgesehen, dass der Anbindungsbereich beim Deckel an einer Horizontalen ausgerichtet ist und dass der Anbindungsbereich beim Einsatzteil zu einer Horizontalen einen spitzen Winkel einschließt, so insbesondere einen spitzen Winkel von 30° bis 60°, weiter beispielsweise 45°. Zudem wird diesbezüglich vorgeschlagen, dass die Griffe von Deckel und Einsatzteil einen gleichen spitzen Winkel zu einer zu einer Bodenaufstandsfläche parallelen Ebene einschließen, so insbesondere einen Winkel von 15° bis 60°, weiter beispielsweise 30°, wobei weiter ausgehend vom jeweiligen Anbindungsbereich der Griff im Betriebszustand des Gefäßes bzw. der Küchenmaschine nach unten in Richtung auf die Aufstellfläche geneigt verläuft.

In einer weiter bevorzugten Ausgestaltung des Erfindungsgegenstandes ist vorgesehen, dass das Gefäß ein Rührgefäß ist mit einer ersten fest verbundenen, einen zentralen Durchlass belassenen Abdeckung und einem darauf aufstehenden Gargefäß, das durch den Deckel abgedeckt ist. Zufolge dieser Ausgestaltung ist das Rührgefäß selbst zwar durch eine Abdeckung verschlossen. Diese selbst ist in dieser Ausführungsform jedoch nicht ein Deckel gemäß vorliegender Erfindung. Vielmehr bietet diese Abdeckung eine Aufstandsfläche für ein hierauf abzustellendes Gargefäß, welches über die mittig in der Abdeckung belassene Öffnung im beheizten Betriebszustand des Rührgefäßes mit Gardämpfen durchsetzt wird. Das Gargefäß selbst ist durch den vorgeschlagenen, erfindungsgemäßen Deckel überdeckt, dies gegebenenfalls unter Zwischenschaltung des Einsatzteiles.

Nachstehend ist die Erfindung anhand der beigefügten Zeichnung, welche lediglich ein Ausführungsbeispiel darstellt, näher erläutert. Es zeigt:
- Fig. 1: eine Küchenmaschine in Seitenansicht mit einem auf einem mit einer Abdeckung versehenen Rührgefäß aufstehenden Gargefäß mit Deckel;

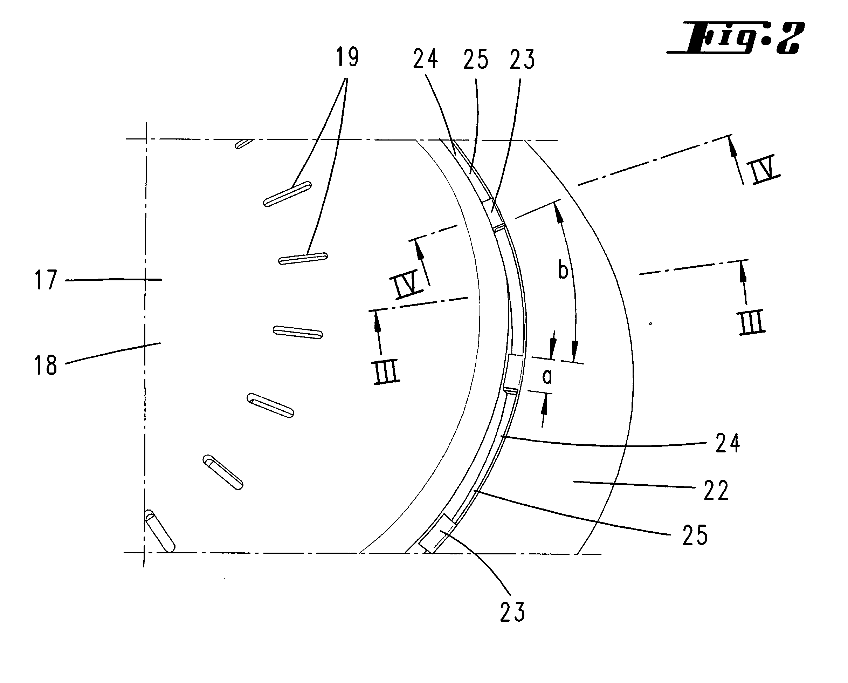

- Fig. 2: eine perspektivische Draufsicht auf die Anordnung gemäß Fig. 1, einen Teilausschnitt darstellend;
- Fig. 3: den Schnitt gemäß der Linie III - III in Fig. 2 durch das Gargefäß, mit Deckel und einem zwischen Gargefäß und Deckel angeordneten Einsatzteil;
- Fig. 4: eine Schnittdarstellung gemäß Fig. 3, jedoch entlang der Linie IV - IV in Fig. 2;

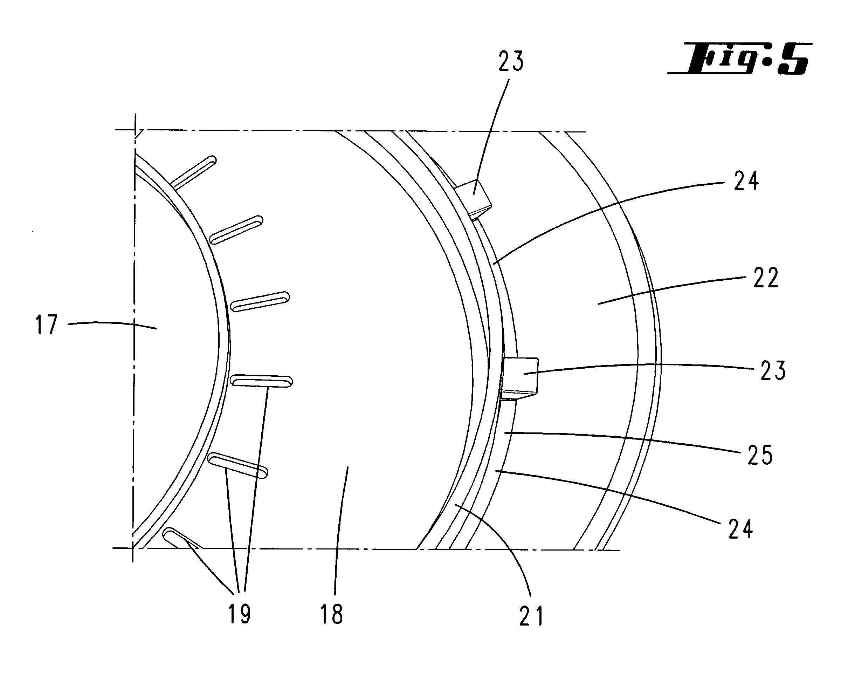

- Fig. 5: den Deckel in perspektivischer Einzeldarstellung in Unteransicht;
- Fig. 6: das Einsatzteil in perspektivischer Einzeldarstellung in Draufsicht;
- Fig. 7: eine Darstellung gemäß Fig. 3, jedoch eine Anordnung ohne Einsatzteil betreffend, bei welcher der Deckel direkt auf dem Rand des Gargefäßes aufliegt;

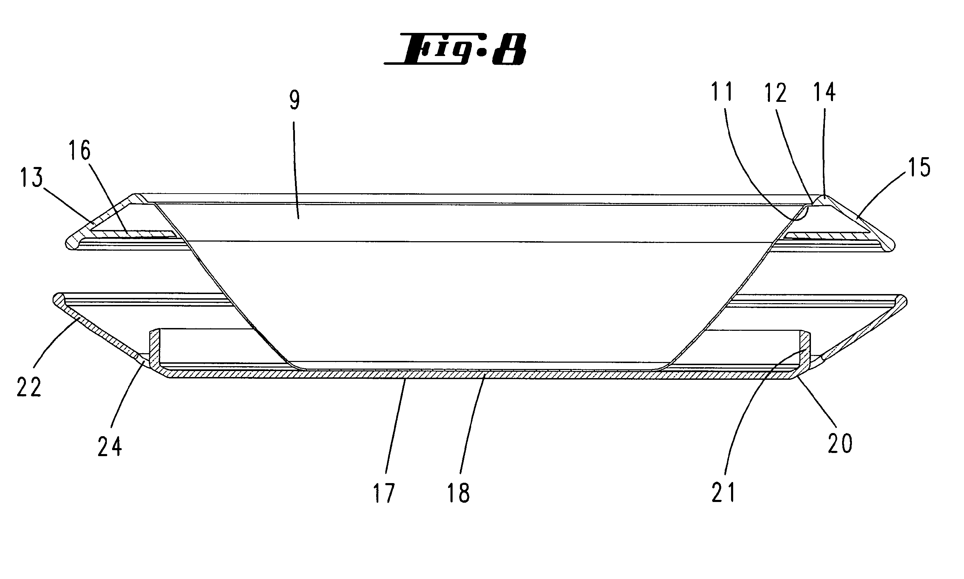

- Fig. 8: in einer Schnittdarstellung die Abstellsituation des Gargefäßes, in welcher dieses auf dem in Überkopfstellung abgelegten Deckel aufsitzt.

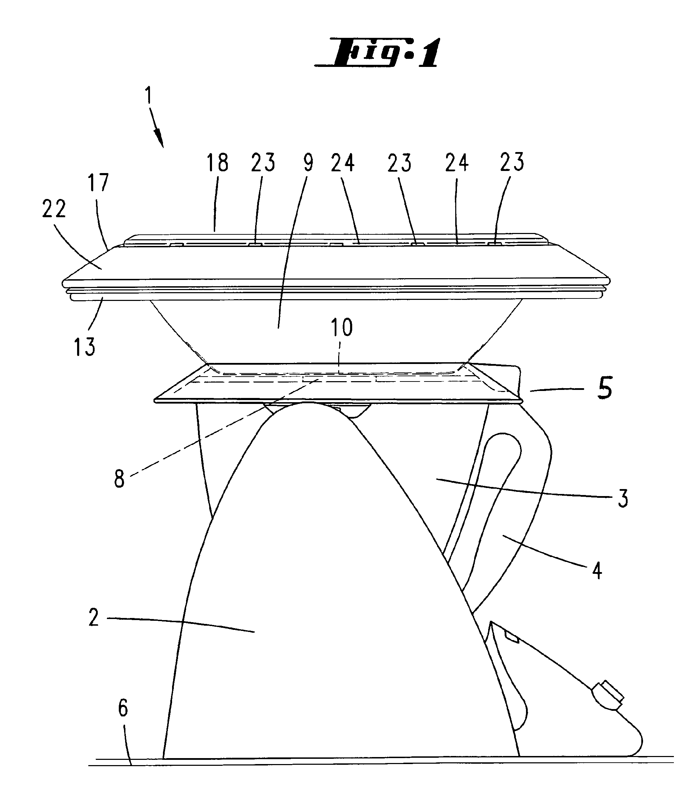

Dargestellt und beschrieben ist zunächst mit Bezug zu Figur 1 eine Küchenmaschine 1 mit einem Gehäuse 2 zur Aufnahme eines Rührgefäßes 3.

Zur Lagerung des Rührgefäßes 3 ist die Küchenmaschine 1 gehäuseseitig mit einer nicht dargestellten Aufnahme versehen. Ein in dem Gehäuse 2 angeordneter nicht dargestellter Antrieb in Form eines Elektromotors treibt ein in dem Rührgefäß 3 vorgesehenes Rührwerk an, welches über eine Kupplungsanordnung mit der Antriebswelle des Antriebs in kraftschlüssiger Verbindung steht.

Das Rührgefäß 3 ist mit einem seitlichen Handgriff 4 versehen. Dieser erstreckt sich nahezu über die gesamte mantelwandaußenseitige Höhe des Rührgefäßes 3, welche Mantelwandung des Rührgefäßes 3 sich zur Rührgefäßöffnung hin trichterförmig erweitert.

Die Rührgefäßöffnung ist überdeckt von einer Abdeckung 5. Diese ist bajonettartig verriegelbar, so insbesondere in Zusammenwirkung mit turmartigen Gehäuseabschnitten, nach welcher Verriegelung die Abdeckung 5 auch fest mit dem Rührgefäß 3 verbunden ist.

Die Abdeckung 5 bietet eine parallel zur Aufstandsfläche 6 der Küchenmaschine 1 ausgerichtete Abdeckungsfläche 7, welche zentral durchsetzt ist von einem im Grundriss kreisförmigen Durchlass 8.

In dieser Konstellation ist die Küchenmaschine 1 dazu geeignet, in dem Rührgefäß 3 gegebenenfalls unter ständigem Umwälzen des in dem Rührgefäß 3 befindlichen Mediums eine Speise insbesondere durch Wärmezufuhr zuzubereiten.

Die Küchenmaschine 1 dient darüber hinaus auch zum Garen von Speisen, so insbesondere unter Nutzung des in dem Rührgefäß 3 erzeugten und durch den Durchlass 8 der Abdeckungsfläche 7 nach oben abziehenden Dampfes. Hierzu ist gemäß den Darstellungen auf der Abdeckung 5 des Rührgefäßes 3 ein Gargefäß 9 aufgesetzt. Dieses ist schüsselartig geformt mit einem parallel zur Abdeckung 5 verlaufenden Boden 10 zum im Wesentlichen vollflächigen Abstellen des Gargefäßes 9 auf der Abdeckung 5.

Das Gargefäß 9 weist entlang der nach oben gerichteten Gargefäßöffnung einen Rand 11 auf, der gebildet ist aus einem horizontal, das heißt im Wesentlichen parallel zur Aufstandsfläche 6 verlaufenden, radial nach außen gerichteten umlaufenden Kragen 12, der eine radiale Länge aufweist, die etwa dem Drei- bis Fünffachen der Materialstärke der Gargefäßwandung entspricht. Diese Gargefäßwandung schließt in dem dargestellten Ausführungsbeispiel einen Winkel von etwa 45° bis 50° zu einer Horizontalen ein.

An dem Rand 11 sind diametral gegenüberliegend zwei Gefäßgriffe 13 befestigt. Diese weisen zunächst ausgehend von dem Anbindungsbereich am Kragen 12 einen in Betriebsstellung nach oben weisenden Wulst 14 auf. Deren zum Rand 11 weisende Flanke verläuft in Parallelausrichtung zu der geneigten Gargefäßwandung, während die andere Flanke der Wulst 14 etwa ausgehend vom Wulstscheitel entgegengesetzt abgewinkelt nach unten in Richtung auf die Aufstandsfläche 6 gerichtet verläuft, dies weiter unter Einschluss eines Winkels von etwa 30° zu einer Horizontalen bzw. zu einer Parallelebene zu der Aufstandsfläche 6. Dieser äußere Griffschenkel 15 ist endseitig mit einer im Querschnitt verrundeten Verdickung versehen. Zudem wurzelt schenkelinnenseitig mit geringem Abstand zum freien Ende des Griffschenkels 15 ein Horizontalsteg 16, welcher sich vom Griffschenkel 15 ausgehend in ebenenparalleler Ausrichtung zu der Aufstandsfläche 6 bzw. zum Kragen 12 in Richtung auf die Außenwandung des Gargefäßes 9 erstreckt, zur Abstützung an dieser Wandung.

Das Gargefäß 9 ist im Betriebszustand überdeckt von einem Deckel 17. Dieser Deckel 17 weist zunächst eine horizontal ausgerichtete, ebene Decke 18 auf. Diese ist mit im Grundriss sternförmig angeordneten schlitzartigen Öffnungen 19 versehen.

Entlang eines umlaufenden Deckelrandes 20 erstreckt sich unterseitig von der Decke 18 ausgehend ein Stützrand 21. Dieser ist zylinderabschnittförmig gebildet, woraus sich insgesamt eine topfförmige Ausgestaltung des Deckels 17 ergibt.

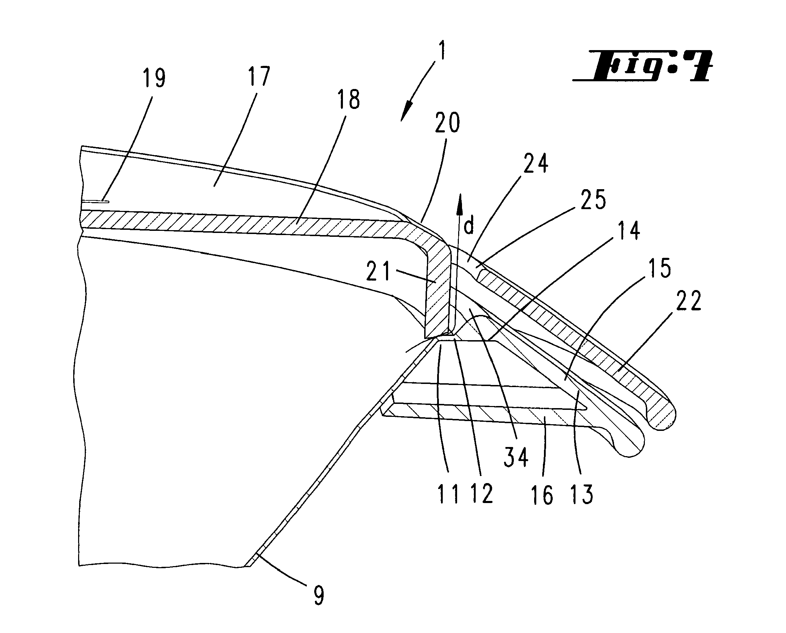

Der Stützabschnitt 21 sitzt bei direkter Anordnung des Deckels 17 auf dem Gargefäß 9 gemäß der Darstellung in Figur 7 auf dem Rand 11 bzw. dem Kragen 12 auf.

Der Deckel 17 weist einen umlaufenden Griff 22 auf. Dieser ist einstückig materialeinheitlich mit dem Deckel 17 verbunden, so weiter zusammen mit dem Deckel 17 beispielsweise im Kunststoffspritzverfahren hergestellt. Der Griff 22 wächst aus dem Übergangsbereich von Deckel 18 und Stützabschnitt 21 entlang des Deckelrandes 20 im Wesentlichen nach radial außen aus, dies zunächst unter Ausbildung eines Anbindungsbereiches 23 der an einer Horizontalen orientiert verläuft, das heißt im Wesentlichen parallel ausgerichtet verläuft zur Decke 18, dies weiter in einer Ebene, die unterhalb der Decke 18, jedoch oberhalb der durch die freie Randkante des Stützabschnittes 21 definierten Ebene angeordnet ist.

Der Anbindungsbereich 23 erstreckt sich über eine radiale Länge, welche in etwa dem Maß der Materialstärke des Stützabschnittes 21 entspricht. Von dem Anbindungsbereich 23 ausgehend erstreckt sich der angebundene Griff 22 unter Einschluss desselben Winkels zur Horizontalen wie auch der Gefäßgriff 13 nach unten in Richtung auf die Aufstandsfläche 6 geneigt. Die Querschnittslänge des Griffes 22 ist weiter so gewählt, dass dessen freie stirnseitige Randkante in einer Projektion des Griffes 22 auf den Gefäßgriff 13 in etwa mit der freien Randkante des Gefäßgriffes 13 fluchtet.

Der im allgemeinen umlaufende Anbindungsbereich 23 für den Griff 22 ist in Umfangsrichtung betrachtet unterbrochen, zur Bildung vereinzelter Anbindungsbereiche 23. Die zwischen diesen vereinzelten Anbindungsbereichen 23 belassenen schlitzartigen Öffnungen 24 formen Wege 25, wobei weiter in Umfangsrichtung betrachtet die Breite a eines Anbindungsbereiches 23 etwa einem Fünftel der Breite b einer Öffnung 24 bzw. eines Weges 25 entspricht.

Der beim Garen in dem Gargefäß 9 entstehende Dampf (siehe Pfeile d) tritt zwischen den Kontaktflächen von Gargefäßrand 11 und zugeordnetem Stützabschnitt 21 des lediglich aufliegenden Deckels 17 zunächst nach radial außen aus dem Bereich des deckelüberfangenen Gargefäßes 9 aus, wonach eine Umlenkung des austretenden Dampfes durch die in Austrittsrichtung nachgeschaltete umlaufende Wulst 14 des Gefäßgriffes 13 nach oben in etwa in eine Parallelausrichtung zur Gefäßachse erreicht wird. Der Dampf durchtritt die Öffnungen 24 zwischen Deckelgriff 22 und Deckelrand 20 kontrolliert nach außen. Sowohl der Deckelgriff 22 als auch der Gefäßgriff 13 werden nicht durch Umströmen von heißem Dampf erhitzt. Die Griffe bewahren eine Temperatur, die ein Anfassen auch während des Garprozesses erlaubt. Auch ist einer Kondensation von Dampf an den Griffen entgegengewirkt, dies aufgrund der gezielten Ableitung des Dampfes zwischen Griff und Deckelrand (vgl. Pfeile d).

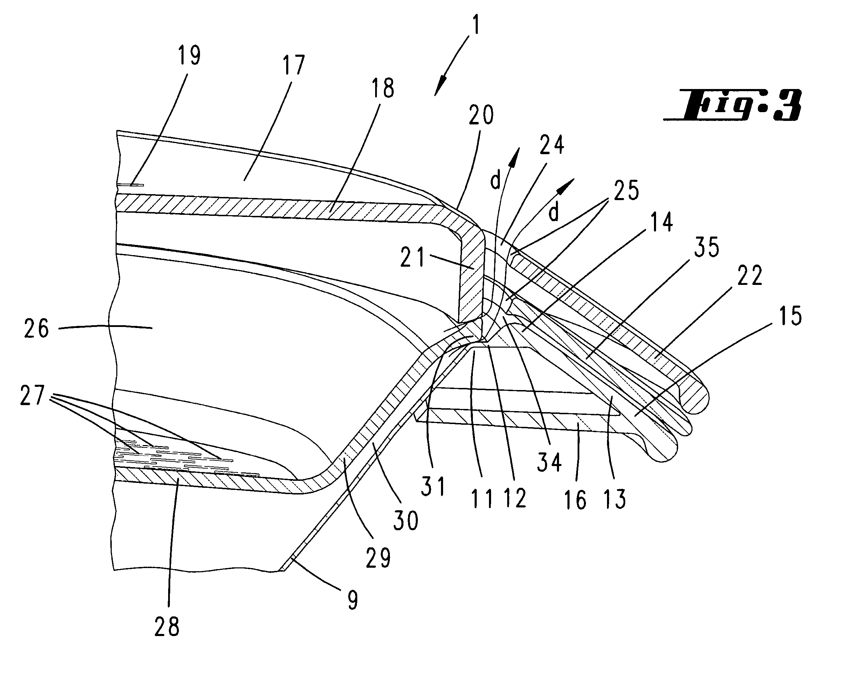

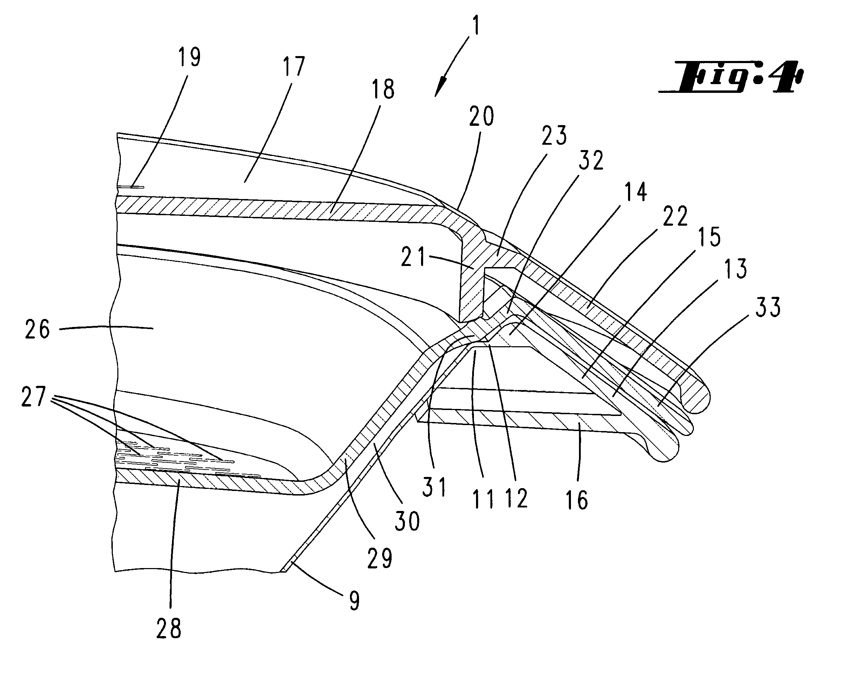

Gemäß den Darstellungen in den Figuren 3 und 4 kann zwischen dem Gargefäß 9 und dem Deckel 17 ein Einsatzteil 26 zwischengeschaltet sein. Dieses ist gleichfalls schüsselartig geformt mit einem Dampfdurchlassöffnungen 27 aufweisenden, im Wesentlichen parallel zum Gargefäßboden 10 verlaufenden Boden 28. Die Wandung 29 des Einsatzteiles 26 nimmt in einem Querschnitt denselben Winkel zu einer Horizontalen ein wie die Wandung des Gargefäßes 9, verläuft weiter in eingesetztem Zustand des Einsatzteiles 26 mit Abstand zu der Gargefäßwandung unter Belassung eines umlaufenden Ringraumes 30. Das Einsatzteil 26 liegt auf dem Rand 11, weiter auf dem Kragen 12 des Gargefäßes 9 auf, wozu das Einsatzteil 26 einen entsprechend im Querschnitt ausgeformten Aufsetzbereich 31 besitzt, der unterseitig angepasst ist zur Auflage auf den Gargefäßkragen 12 und oberseitig angepasst ausgeformt ist zur Abstützung des deckelseitigen Stützabschnitts 21.

Von dem Aufsetzbereich 31 geht ein Anbindungsbereich 32 im Wesentlichen nach radial außen ab, dies unter Einschluss eines spitzen Winkels zu einer Horizontalen, der so bemessen ist, dass dieser Anbindungsbereich 32 parallel versetzt zu der nach radial innen weisenden Flanke des Wulstes 14 verläuft.

Dieser nach oben ansteigende Anbindungsbereich 32 geht etwa in Überdeckung mit dem Scheitel des Wulstes 14 über in einen etwa rechtwinklig zum Anbindungsbereich 32 sich wiederum nach unten in Richtung auf die Aufstandsfläche 6 abwinkelnden Griff 33. Dieser verläuft im Querschnitt parallel ausgerichtet zu dem Gefäßgriff 13 bzw. zu dem Deckelgriff 22 und ist weiter gemäß der Darstellung in Figur 4 sandwichartig zwischen dem Deckelgriff 22 und dem Gefäßgriff 13 positioniert. Die Erstreckungslänge dieses Griffes 33 ist angepasst an die jeweilige Erstreckungslänge von Gefäßgriff 13 und Deckelgriff 22, so dass dessen freie Stirnkante in einer Projektion auf den Deckelgriff 22 mit dessen freier Stirnkante fluchtet.

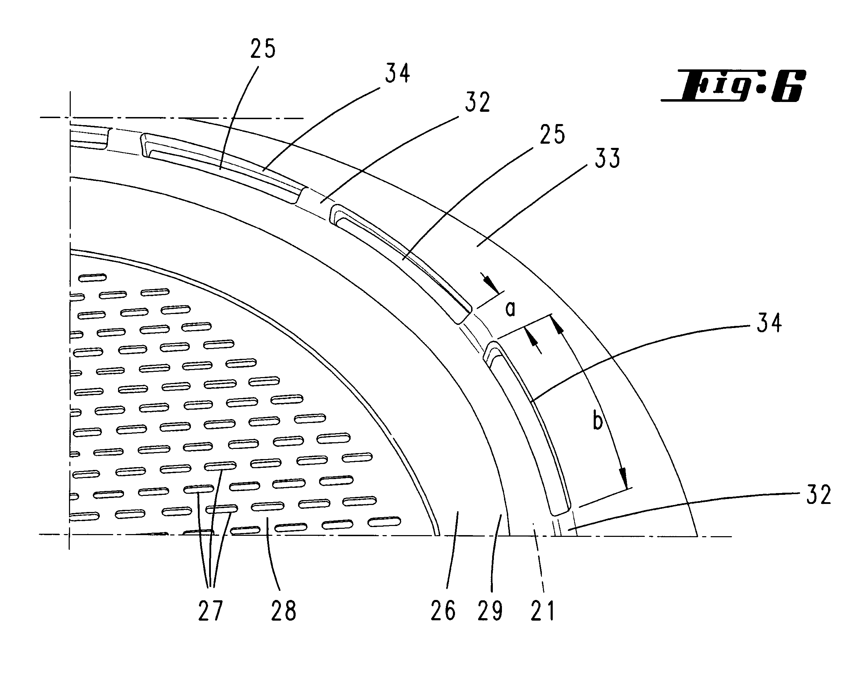

Auch der Anbindungsbereich 32 des Einsatzteiles 26 ist umfangsmäßig vereinzelt in einzelne Anbindungsbereiche 32, zwischen welchen sich jeweils schlitzartige Öffnungen 34 erstrecken. Auch diese weisen gemäß der Darstellung in Figur 6 eine in Umfangsrichtung gemessene Länge b auf, die etwa dem Fünffachen der in selber Richtung gemessenen Breite a eines Anbindungsbereiches 32 entspricht.

Wie insbesondere aus der Darstellung in Figur 3 zu erkennen, tritt zufolge dieser Ausgestaltung auch bei einer solchen Konstellation mit einem Einsatzteil 26 der sowohl aus dem Rührgefäß 3 als auch aus dem Einsatzteil 26 radial nach außen tretende Dampf durch Wege 25 ausformende Öffnungen 24 und 34 der Griffe 22 und 33 kontrolliert zwischen den jeweiligen Griffbereichen und den zugeordneten Randbereichen aus.

## Patentansprüche

1. Küchenmaschine (1) mit einem in seinem unteren Bereich aufheizbaren Gefäß (3), wobei das Gefäß (3) ein Rührgefäß ist mit einer ersten fest verbundenen, einen zentralen Durchlass (8) belassenden Abdeckung (5) und einem darauf aufstehenden Gargefäß (9), das durch einen Deckel (17) abgedeckt ist, wobei der Deckel (17) mittels mindestens einem seitlich über das Gargefäß (9) überkragenden Griff (22) zu handhaben ist, wobei weiter im Gefäß (3) erzeugter Dampf zwischen dem Deckel (17) und einer Gefäßwandung entweichen kann, **dadurch gekennzeichnet, dass** sich entlang einem Deckelrand (20) unterseitig ein Stützabschnitt (21) erstreckt, der bei direkter Anordnung des Deckels (17) auf dem Gargefäß (9) auf einem Rand (11) des Gargefäßes (9) auftrifft, wobei dem Dampf im Bereich des Griffes (22) ein Weg (25) zwischen dem Griff (22) und dem Stützabschnitt (21) vorgegeben ist.

2. Küchenmaschine (1) mit einem in seinem unteren Bereich aufheizbaren Gefäß, wobei das Gefäß (3) durch einen Deckel (17) abgedeckt ist und der Deckel (17) mittels mindestens einem seitlich über das Gefäß (3) überkragenden Griff (22) zu handhaben ist, wobei weiter im Gefäß (3) erzeugter Dampf zwischen dem Deckel (17) und einer Gefäßwandung entweichen kann, **dadurch gekennzeichnet, dass** dem Dampf im Bereich des Griffes (22) ein Weg (25) zwischen dem Griff (22) und dem Deckelrand (20) vorgegeben ist und dass der Griff (22) mit dem Deckelrand (20) nur über einen Teilbereich einer Breite des Griffes (22) verbunden ist und dass der Weg (25) seitlich zum Anbindungsbereich (23) des Griffes (22) gegeben ist.

3. Küchenmaschine nach Anspruch 1, **dadurch gekennzeichnet, dass** der Anbindungsbereich (23) des Griffes (22) oberhalb des Topfrandes (11) vorgesehen ist.

4. Küchenmaschine nach einem der vorangehenden Ansprüche, **dadurch gekennzeichnet, dass** zwischen dem Deckel (17) und dem Topfrand (11) ein Einsatzteil (26) mit einem Griff (33) angeordnet ist und dass dem Dampf im Bereich des Griffes (33) ein Weg (25) zwischen dem Griff (33) und einem Einsatzteilrand (20) vorgegeben ist.

5. Küchenmaschine nach einem der vorangehenden Ansprüche, **dadurch gekennzeichnet, dass** der Griff (22, 33) des Deckels (17) und/oder des Einsatzteiles (26) umlaufend ausgebildet ist.

6. Küchenmaschine nach einem der vorangehenden Ansprüche, **dadurch gekennzeichnet, dass** die Breite (a) eines Anbindungsbereiches (23, 33) einem Drittel bis einem Zwanzigstel der freien Länge (b) zwischen zwei Anbindungsbereichen (23, 33) entspricht.

7. Küchenmaschine nach einem der vorangehenden Ansprüche, **dadurch gekennzeichnet, dass** der Anbindungsbereich (23) beim Deckel (17) an einer Horizontalen ausgerichtet ist und dass der Anbindungsbereich (33) beim Einsatzteil (26) zu einer Horizontalen einen spitzen Winkel einschließt.

## Claims

1. Food processor (1) having a vessel (3) which can be heated in a lower region thereof, the vessel (3) being a mixing vessel comprising a first, rigidly connected cover (5) which leaves a central opening (8) and comprising a refining vessel (9) on top of said cover, said refining vessel being covered by a lid (17), said lid (17) being handled using at least one handle (22) projecting laterally over the refining vessel (9), steam generated in the vessel (3) also being able to escape between the lid (17) and a vessel wall, **characterised in that** a support portion (21) extends along the underside of the lid edge (20) and abuts against an edge (11) of the refining vessel (9) when the cover (17) is arranged directly on the refining vessel (9), a channel (25) being provided between the handle (22) and the support portion (21) for the steam in the region of the handle (22).

2. Food processor (1) having a vessel which can be heated in a lower region thereof, the vessel (3) being covered by a lid (17) and said lid (17) being handled using at least one handle (22) projecting laterally over the vessel (3), steam generated in the vessel (3) also being able to escape between the lid (17) and a vessel wall, **characterised in that** a channel (25) is provided between the handle (22) and the lid edge (20) for the steam in the region of the handle (22), and **in that** the handle (22) is only connected to the lid edge (20) over part of the width of said handle (22), and **in that** the channel (25) is lateral to the connection region (23) of the handle (22).

3. Food processor according to claim 1, **characterised in that** the connection region (23) of the handle (22) is provided above the rim (11) of the vessel.

4. Food processor according to any one of the preceding claims, **characterised in that** an insert (26) comprising a handle (33) is arranged between the lid (17) and the rim (11) of the vessel, and **in that** a channel (25) is provided between the handle (33) and an edge of the insert (20) for the steam in the region of the handle (33).

5. Food processor according to any one of the preceding claims, **characterised in that** the handle (22, 33) of the lid (17) and/or of the insert (26) is formed circumferentially.

6. Food processor according to any one of the preceding claims, **characterised in that** the width (a) of a connection region (23, 33) corresponds to a third to a twentieth of the free length (b) between the two connection regions (23, 33).

7. Food processor according to any one of the preceding claims, **characterised in that** the connection region (23) of the lid (17) is oriented on a horizontal, and **in that** the connection region (33) of the insert (26) is at an acute angle to a horizontal.

## Revendications

1. Appareil de cuisine (1) doté d'un récipient (3), pouvant être chauffé dans sa zone inférieure, le récipient (3) étant un récipient d'agitation, avec un premier recouvrement (5) relié rigidement, laissant subsister un passage (8) central, et un récipient de cuisson (9) placé au-dessus, couvert par un couvercle (17), le couvercle (17) étant à manipuler à l'aide d'au moins une poignée (22) ressortant latéralement du récipient de cuisson (9), en outre, de la vapeur produite dans le récipient (3) pouvant s'échapper entre le couvercle (17) et une paroi de récipient, **caractérisé en ce que**, le long d'un bord de couvercle (20), en face inférieure s'étend un tronçon d'appui (21) qui repose sur un bord (11) du récipient de cuisson (9), dans le cas dans lequel le couvercle (17) est directement agencé sur le récipient de cuisson (9), un chemin (25), entre la poignée (22) et le tronçon d'appui (21), étant affecté à la vapeur dans la zone de la poignée (22).

2. Appareil de cuisine (1) doté d'un récipient, pouvant être chauffé dans sa zone inférieure, le récipient (3) étant couvert par un couvercle (17) et le couvercle (17) étant à manipuler à l'aide d'au moins une poignée (22) ressortant latéralement du récipient (3), en outre, de la vapeur produite dans le récipient (3) pouvant s'échapper entre le couvercle (17) et une paroi de récipient, **caractérisé en ce qu'**un chemin (25), entre la poignée (22) et le bord de couvercle (20), est affecté à la vapeur dans la zone de la poignée (22), et **en ce que** la poignée (22) est reliée au bord de couvercle (20) seulement sur une zone partielle d'une largeur de la poignée (22), et **en ce que** le chemin (25) est fourni latéralement par rapport à la zone d'attachement (23) de la poignée (22).

3. Appareil de cuisine selon la revendication 1, **caractérisé en ce que** la zone d'attachement (23) de la poignée (22) est prévue au-dessus du bord de pot (11).

4. Appareil de cuisine selon l'une des revendications précédentes, **caractérisé en ce qu'**une pièce d'insert (26), avec une poignée (33), est disposée entre le couvercle (17) et le bord de pot (11), et ce qu'un chemin (25), entre la poignée (33) et un bord de pièce d'insert (20), est affecté à la vapeur, dans la zone de la poignée (33).

5. Appareil de cuisine selon l'une des revendications précédentes, **caractérisé en ce que** la poignée (22, 33) du couvercle (17) et/ou de la pièce d'insert (26) est de configuration périphérique.

6. Appareil de cuisine selon l'une des revendications précédentes, **caractérisé en ce que** la largeur (a) d'une zone d'attachement (23, 33) correspond à un tiers jusqu'à un vingtième de la longueur libre (b) entre deux zones d'attachement (23, 33).

7. Appareil de cuisine selon l'une des revendications précédentes, **caractérisé en ce que** la zone d'attachement (23), concernant le couvercle (17), est orientée selon une horizontale, et **en ce que** la zone d'attachement (33), concernant la pièce d'insert (26), fait un angle aigu avec une horizontale.
